# EUROPEAN PATENT SPECIFICATION

(11) **EP 4 478 486 B1**
(45) Date of publication and mention of the grant of the patent: **17.06.2026**
(21) Application number: 23812019.0
(22) Date of filing: 27.04.2023
(51) Int. Cl.: H01M 10/6554, H01M 10/613, H01M 10/653, H01M 50/211, H01M 10/647, H01M 50/24, H01M 50/271

(54) **BATTERY MODULE AND METHOD FOR MANUFACTURING THE SAME**
BATTERIEMODUL UND BATTERIEMODULHERSTELLUNGSVERFAHREN
MODULE DE BATTERIE ET PROCÉDÉ DE FABRICATION DE MODULE DE BATTERIE

(30) Priority: 26.05.2022 KR 20220064917; 05.04.2023 KR 20230044614
(43) Date of publication of application: 18.12.2024
(73) Proprietor: LG Energy Solution, Ltd., Seoul 07335 (KR)
(72) Inventor: JUNG, Ki Taek, Daejeon 34122 (KR); PARK, Jun Kyu, Daejeon 34122 (KR); SEONG, Jun Yeob, Daejeon 34122 (KR)
(74) Representative: Plasseraud IP
(86) International application number: PCT/KR2023/005819
(87) International publication number: WO 2023/229243

(56) References cited:
- DE-B4- 102019 201 986
- KR-A- 20170 030 954
- KR-A- 20200 055 215
- KR-A- 20200 113 849
- KR-A- 20210 063 201
- KR-A- 20210 063 201
- KR-A- 20210 077 416
- KR-A- 20220 043 379
- KR-B1- 102 089 645
- US-A1- 2020 067 040
- US-A1- 2021 288 366

## Description

### TECHNICAL FIELD

### CROSS-REFERENCE TO RELATED APPLICATION

The present application claims the benefit of the priority of Korean Patent Application Nos. 10-2022-0064917, filed on May 26, 2022, and 10-2023-0044614, filed on April 05, 2023.

### TECHNICAL FIELD

The present invention relates to a battery module and a method for manufacturing the same, and more particularly, to a battery module in which a component welding part of a cooling plate, etc., is prevented from being ruptured during insertion and assembly of a cell block assembly, or a component welding part such as a cooling plate, etc., is prevented from being ruptured when a swelling phenomenon of the battery module occurs as the battery module is used for a long time to prevent the battery module from being defective, thereby implementing remarkably excellent concept products, and a method for manufacturing the same.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

In particular, in terms of materials, there is a high demand for lithium secondary batteries such as lithium ion batteries and lithium ion polymer batteries having advantages such as high energy density, discharge voltage, and output stability.

The secondary batteries are classified into cylindrical batteries and prismatic batteries, in which an electrode assembly is embedded in a cylindrical or prismatic metal can, and pouch-type batteries, in which an electrode assembly is embedded in a pouch-type case made of an aluminum laminate sheet according to shapes of battery cases. However, an operating voltage of a unit cell, i.e., a unit battery cell is about 2.5 V to about 4.2 V.

Therefore, when a higher output voltage is required, a plurality of individual battery cells are connected to form a secondary battery module, and a plurality of battery modules are assembled to form a battery pack.

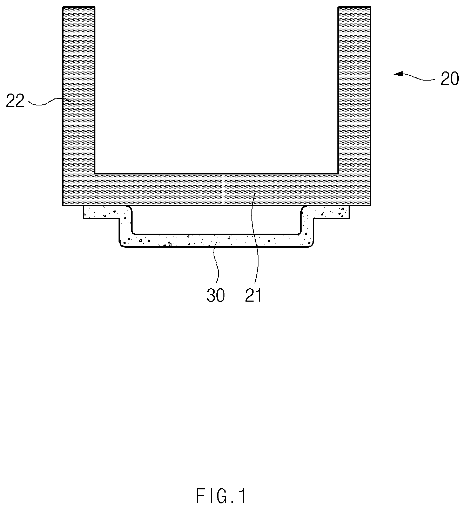

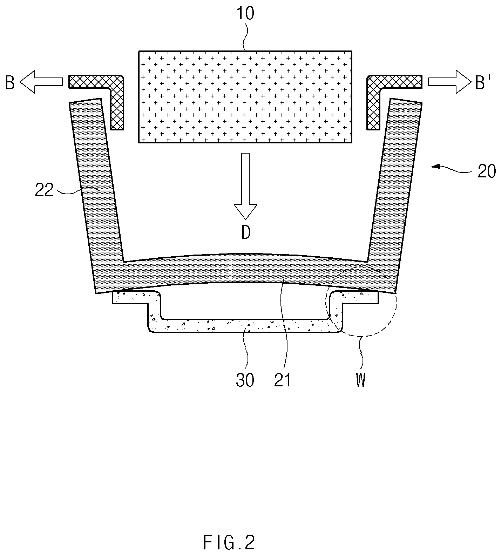

FIG. 1 is a cross-sectional view illustrating a portion of a frame in a battery module according to a related art. FIG. 2 is a cross-sectional view illustrating a state in which a cell block assembly is inserted into the frame of FIG. 1.

Referring to FIGS. 1 and 2, in a battery module constituted by pouch-type secondary batteries, a cell block assembly 10 configured by stacking a plurality of battery cells, which are manufactured as a pouch-type secondary battery by a predetermined number is mounted in a frame 20 having a 'U'-shaped cross-section, and the frame 20 is provided so that an upper side thereof is opened, and both sides thereof face a bottom surface of the cell block assembly 10.

Although not shown in the drawings, a top plate may be coupled to the opened upper side of the frame through brazing, and an end plate may be coupled to each of front and rear sides of the frame to generally provide a battery module having a rectangular parallelepiped shape. In addition, a cooling plate 30 in which a coolant is circulated to cool the block assembly 10 and the frame 20 may be coupled through the brazing welding.

Referring to FIG. 2, in which the cell block assembly is inserted into the frame of FIG. 1, according to the related art, in order to insert the cell block assembly into the frame, a sidewall of the frame may be spread to both sides B and B', and the cell block assembly may be inserted while moving in a downward direction D. Here, in the process of spreading both the sides of the frame sidewall, a phenomenon in which a shape of the bottom part of the frame is convexly bent upward may occur. In the process, there is a problem in that a brazing-welding part W of the cooling plate mounted under the bottom part of the frame is ruptured (or damaged). In addition, as a usage time of the battery module increases, even when the swelling phenomenon of the battery module occurs, the rupture of the welding part of components such as the cooling plates may occur, which is a problem. This may cause a defect in the battery module, and thus, a product having an excellent concept may not be implemented, which is a problem.
US2021288366A1 discloses an energy storage system. KR20210063201A discloses a battery module and battery pack including the same. US2020067040A1 discloses a battery module and manufacturing method thereof.

### DISCLOSURE OF THE INVENTION

### TECHNICAL PROBLEM

The present invention has been made to solve the above problem, and an object of the present invention is to provide a battery module in which a component welding part of a cooling plate, etc., is prevented from being ruptured during insertion and assembly of a cell block assembly, or a component welding part such as a cooling plate, etc., is prevented from being ruptured when a swelling phenomenon of the battery module occurs as the battery module is used for a long time to prevent the battery module from being defective, thereby implementing remarkably excellent concept products, and a method for manufacturing the same.

### TECHNICAL SOLUTION

The battery module according to the present invention includes a cell block assembly that is an assembly of a plurality of cells, a bottom plate disposed on one surface of the cell block assembly, a frame configured to surround the other surface and a side surface of the cell block assembly, and an end plate disposed on each of front and rear surfaces of the cell block assembly.

The battery module may further include a cooling plate coupled to one surface of the bottom plate at one side of the bottom plate.

The cooling plate may be coupled to the one surface of the bottom plate through brazing welding.

The frame includes a ceiling part configured to surround the other surface of the cell block assembly, and a sidewall configured to surround the side surface of the cell block assembly.

The ceiling part and the sidewall may be integrated with each other.

One end of the sidewall and both ends of the bottom plate is coupled to each other through welding.

The sidewall includes a first sidewall facing the cell block assembly, and a second sidewall connected to the first sidewall in a stepped shape at one side of the first sidewall to extend in a direction of the one side of the first sidewall.

The bottom plate includes a first plate part facing the cell block assembly to extend in a direction parallel to one surface of the cell block assembly, and a second plate part extending from each of both ends of the first plate part in a direction away from the cell block assembly.

An end of the second sidewall and an end of the second plate part may be coupled to each other through welding (W).

The battery module may further include an insulating film disposed between the frame and the cell block assembly.

The insulating film may include a horizontal part disposed between the ceiling part and the cell block assembly, and a vertical part disposed between the sidewall and the cell block assembly, wherein the horizontal part and the vertical part may be integrated with each other.

The battery module may further include a thermal resin disposed between the other surface of the bottom plate and one surface of the cell block assembly.

A method for manufacturing a battery module according to the present invention includes a process (S01) of preparing a bottom plate having one surface to which a cooling plate is coupled, a process (S02) of placing a cell block assembly, which is an assembly of a plurality of cells, on the other surface of the bottom plate, a process (S03) of coupling a frame to the bottom plate to surround the other surface and a side surface of the cell block assembly, and a process (S04) of coupling an end plate to each of front and rear surfaces of the cell block assembly.
the process of coupling the frame to the bottom plate may include a process of coupling the frame, to which an insulating sheet is coupled to an inner surface thereof, to the bottom plate.

The process (S02) of the placing the cell block assembly may include a process of placing the cell block assembly on the other surface of the bottom plate in a state in which a thermal resin is disposed between the cell block assembly and the bottom plate.

The process (S02) of the placing the cell block assembly may include a process of placing the cell block assembly on the other surface of the bottom plate in a state in which a thermal resin is disposed between the cell block assembly and the bottom plate.

### ADVANTAGEOUS EFFECTS

In the battery module and the method for manufacturing the same according to the present invention, while the cell block assembly is inserted and assembled, the component welding part of the cooling plate, etc., may be prevented from being ruptured, or the component welding part such as the cooling plate, etc., may be prevented from being ruptured when the swelling phenomenon of the battery module occurs as the battery module is used for a long time to prevent the battery module from being defective, thereby implementing the remarkably excellent concept products.

### BRIEF DESCRIPTION OF THE DRAWINGS

FIG. 1 is a cross-sectional view illustrating a portion of a frame in a battery module according to a related art.
FIG. 2 is a cross-sectional view illustrating a state in which a cell block assembly is inserted into the frame of FIG. 1.
FIG. 3 is an exploded perspective view of a battery module according to Embodiment 1 of the present invention.
FIG. 4 is a cross-sectional view illustrating a manner in which the battery module is assembled according to Embodiment 1 of the present invention.
FIG. 5 is a cross-sectional view illustrating a state in which the battery module is assembled according to Embodiment 1 of the present invention.
FIG. 6 is a diagram illustrating a method for manufacturing a battery module according to Embodiment 2 of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

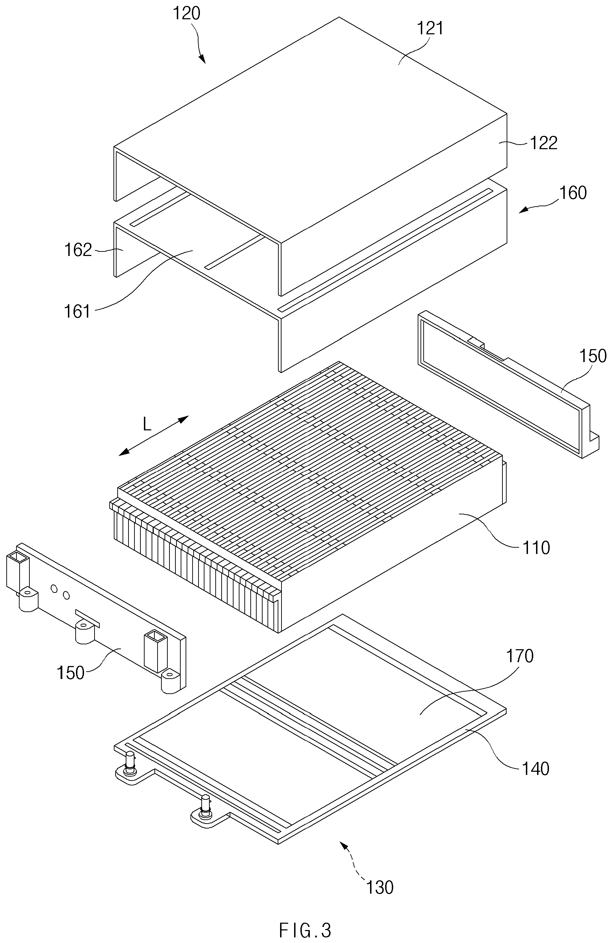

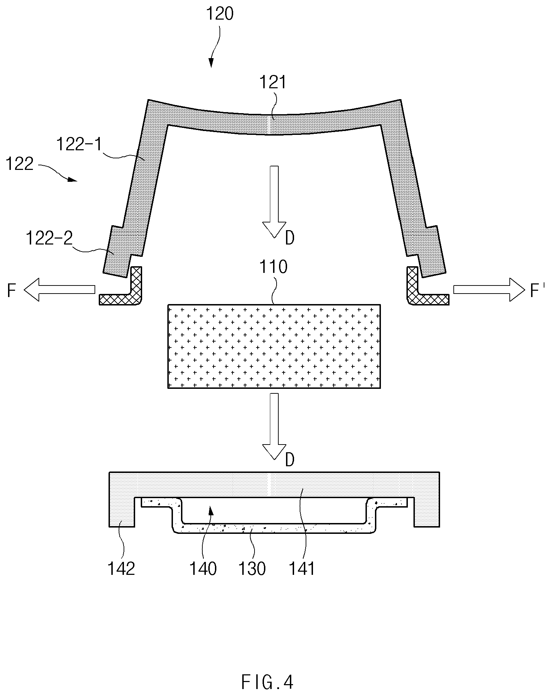

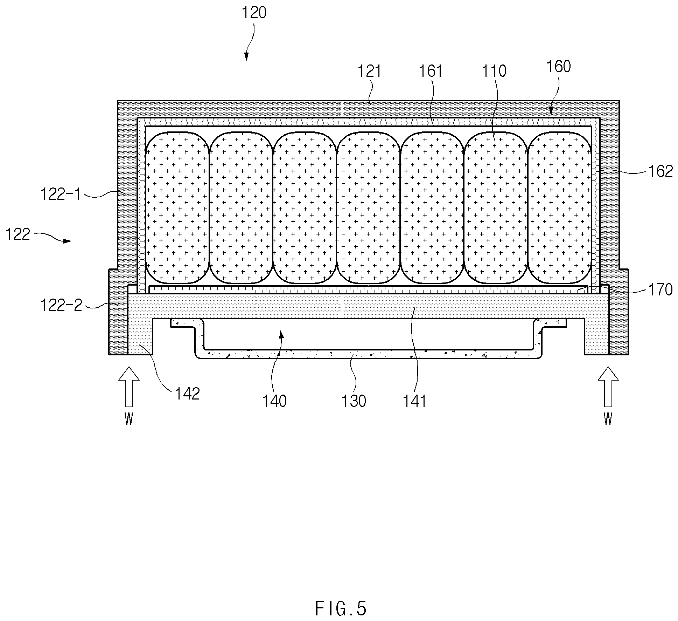

FIG. 3 is an exploded perspective view of a battery module according to Embodiment 1 of the present invention. FIG. 4 is a cross-sectional view illustrating a manner in which the battery module is assembled according to Embodiment 1 of the present invention. FIG. 5 is a cross-sectional view illustrating a state in which the battery module is assembled according to Embodiment 1 of the present invention.

Referring to FIGS. 3 and 5, a battery module according to Embodiment 1 of the present invention may include a cell block assembly 110, a bottom plate 140, a frame 120, and an end plate 150. In addition, the battery module may further include a cooling plate 130.

The cell block assembly 110 may be an assembly of a plurality of battery cells. Specifically, the battery module may be a cell assembly configured by stacking a plurality of battery cells manufactured as a pouch-type secondary battery by a predetermined number.

The bottom plate 140 may be a component disposed on one surface of the cell block assembly 110. Here, one surface may be, for example, a bottom surface of the cell block assembly. The bottom plate 140 may have a simple flat plate shape or may be partially deformed from the flat plate shape. For example, in Embodiment 1 of the present invention, the bottom plate 140 may include a first plate part 141 and a second plate part 142. The first plate part 141 may be a portion that faces the cell block assembly 110 and extends in a direction parallel to one surface of the cell block assembly 110. Referring to FIG. 5, the direction parallel to the one surface of the cell block assembly 110 may mean a horizontal direction. That is, the first plate part 141 may be a portion extending from the bottom plate 140 in a horizontal direction parallel to the one surface of the cell block assembly 110. The second plate part 142 may be a portion extending from both ends of the first plate part 141 in a direction away from the cell block assembly 110. Based on FIG. 5, the direction away from the cell block assembly 110 may be a vertically downward direction. That is, the second plate part 142 may be a portion extending vertically from each of both the ends of the horizontally extending first plate part 141 to extend downward. Such a shape may have an advantage of increasing in cooling area.

The frame 120 may be a structure surrounding the other surface and a side surface of the cell block assembly 110. Here, as an example, the other surface may mean a top surface of the cell block assembly 110. That is, the frame 120 may be a structure surrounding the top and side surfaces of the cell block assembly 110. As illustrated in FIG. 3, the frame 120 has a shape extending in a longitudinal direction L of the cell block assembly 110, and a cross-section of the frame 120 may have a shape such as an inverted U shape (reverse u shape).

Referring to FIGS. 3 and 5, particularly, the frame 120 may include a ceiling part 121 surrounding the other surface of the cell block assembly 110 and a sidewall 122 surrounding the side surface of the cell block assembly 110. Here, the ceiling part 121 and the sidewall 122 may be integrated with each other. The battery module according to Embodiment 1 of the present invention may be formed in a manner in which the bottom plate 140 is coupled to the one open side of the frame 120 by brazing welding. As described above, the frame may be coupled to the bottom plate 140 by welding, and specifically, one end of the sidewall and both the ends of the bottom plate 140 may be coupled by welding. Here, the one side may mean, for example, a lower side. That is, the bottom plate may be coupled to the open lower side of the frame by the brazing welding.

In addition, referring to FIG. 3, the battery module according to Embodiment 1 of the present invention may include the end plate 150 to implement a battery module of which all sides are closed. The end plate 150 may be respectively disposed on front and rear surfaces of the cell block assembly 110. The battery module having a rectangular parallelepiped shape may be formed by welding the end plate 150 to each of the front and rear of the frame 120. In this case, power output from the cell block assembly 110 may be output to the outside of the end plate 150.

The cooling plate 130 may be coupled to one surface of the bottom plate 140 at one side of the bottom plate 140. Here, as an example, the one side of the bottom plate may mean a lower side of the bottom plate. In addition, the one surface of the bottom plate may mean a bottom surface of the bottom plate. The manner in which the cooling plate 130 is coupled to the one surface of the bottom plate 140 may be performed by welding, particularly, by brazing welding. A cooling passage may be formed in the cooling plate 130, and a coolant may be circulated to cool the cell block assembly 110 and the bottom plate 140.

FIG. 4 is a cross-sectional view illustrating a manner in which the battery module is assembled according to Embodiment 1 of the present invention, and FIG. 5 is a cross-sectional view illustrating a state in which the battery module is assembled according to Embodiment 1 of the present invention. When assembled in the form of FIG. 4, the frame 120 and the bottom plate 140 may be assembled in the same form as in FIG. 5.

Referring to FIG. 4, in order to assemble the battery module according to Embodiment 1 of the present invention, the cell block assembly 110 may be placed on the bottom plate 140, and the frame 120 may be covered thereon. While the frame 120 moves from the other side of the cell block assembly 110 to the one direction D, the frame 120 may cover the cell block assembly 110 and then be coupled to the bottom plate 140. Here, the one direction may mean, for example, a downward direction. Both sides of the frame 120, particularly, both ends of the sidewall 122 in the one direction D may be coupled to both ends of the bottom plate 140 by the welding. In order to allow the cell block assembly 110 to be easily inserted into the frame when the frame 120 covers the cell block assembly 110 while moving in the one direction D, the cell block assembly 110 may be inserted while a lower end of the sidewall 122 of the frame 120 is spread to both sides F and F'. Unlike the shape of the U-frame 120 according to the related art, since the shape of the bottom plate 140 is not changed even if the frame 120 is spread to both the sides, the welding part of the cooling plate 130 welded to the one surface of the bottom plate 140 may not be damaged. As described above, the battery module according to Embodiment 1 of the present invention may prevent the welding part such as the cooling plate 130 from being damaged during the insertion and assembly of the cell block assembly 110.

In addition, since the second plate part 142 of the bottom plate 140 undergoes tensile force even if swelling occurs as the usage time of the battery increases, a risk of rupture of the brazing welding part due to the swelling may be prevented.

Referring to FIG. 5, in the battery module according to Embodiment 1 of the present invention, the sidewall 122 may include a first sidewall 122-1 and a second sidewall 122-2.

The first sidewall 122-1 may be a portion of the sidewall 122 facing the cell block assembly 110. The second sidewall 122-2 may be connected to the first sidewall 122-1 in a stepped shape at one side of the first sidewall 122-1 to extend to the one side of the first sidewall 122-1. As illustrated in FIG. 4, when two lower ends of the sidewall 122 are spread apart from each other to both the sides F and F' through a tool such as a bracket, the second sidewall 122-2 having the stepped shape may be more advantageous in shape.

In addition, when the sidewall 122 is formed in a stepped shape like the first sidewall 122-1 and the second sidewall 122-2, even if the swelling occurs as the usage time of the battery increases, the swelling may be absorbed to reduce the risk of the brazing welding fracture on one surface (or bottom surface) of the bottom plate 140.

In addition, an end of the second sidewall 122-2 and an end of the second plate part 142 may be coupled to each other by welding W. Particularly, an end of the second sidewall 122-2 and an end of the second plate part 142 may be coupled to each other by the welding W. More specifically, a lower end of the second sidewall 122-2 and a lower end of the second plate part 142 may be coupled to each other by the welding W. Such a shape may be a shape in which a welded portion is disposed as far away from the cell block assembly 110 as possible.

Since the welding for coupling the sidewall 122 to the bottom plate 140 is laser welding, heat may be generated at a welded position. Therefore, as the welded position is farther from the cell block assembly 110, the cell block assembly 110 may be prevented from being damaged due to the heat. The battery module according to Embodiment 1 of the present invention may have an advantageous in this aspect. That is, since the welding is performed at the lower end of the second sidewall part 122-2 and the lower end of the second plate part 142, the cell block assembly 110 may be prevented from being damaged due to welding heat. In addition, the shape of the second plate part 142 extending in a direction perpendicular to the first plate part 141 may have an advantage of improving cooling efficiency by increasing in cooling area.

Referring to FIG. 5, the battery module according to Embodiment 1 of the present invention may further include an insulating film disposed between the frame 120 and the cell block assembly 110.

In detail, the insulating film may include a horizontal part 161 and a vertical part 162. The horizontal part 161 may be a portion disposed between the ceiling part 121 and the cell block assembly 110. The vertical part 162 may be a portion disposed between the sidewall 122 and the cell block assembly 110. The horizontal part 161 and the vertical part 162 may be integrated with each other. In addition, the horizontal part 161 and the vertical part 162 may be formed in a continuous form. When the insulating film is provided as described above, current leakage or short circuit may be more significantly prevented. For example, the insulating film may be provided in a form attached to an inner surface of the frame 120.

In addition, the battery module according to Embodiment 1 of the present invention may further include a thermal resin 170 disposed between the other surface (or top surface) of the bottom plate 140 and one surface (or bottom surface) of the cell block assembly 110. The heat generated in the cell block assembly 110 may be transferred to the bottom plate 140 through the thermal resin 170, and the heat transferred to the bottom plate 140 may be transferred again to the cooling plate 130 to cool the cooling plate 130. Here, the thermal resin 170 may play a role of remarkably improving the cooling efficiency by further improving thermal conductivity.

### Embodiment 2

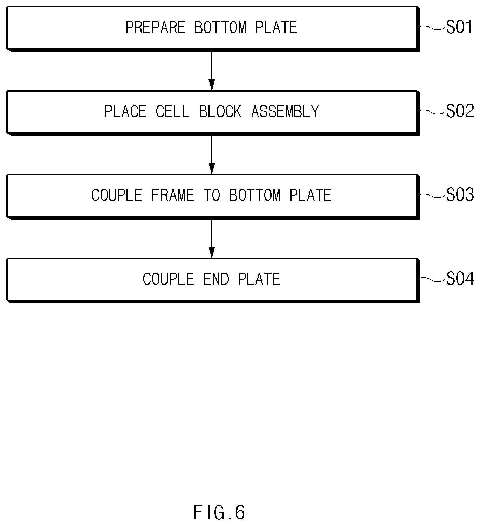

FIG. 6 is a diagram illustrating a method for manufacturing a battery module according to Embodiment 2 of the present invention.

Embodiment 2 of the present invention is different from Embodiment 1 in that it relates to a method for manufacturing the battery module according to Embodiment 1 of the present invention.

The contents that are duplicated with Embodiment 1 will be omitted as much as possible, and Embodiment 2 will be described with a focus on the differences. That is, it is obvious that contents that are not described in Embodiment 2 may be regarded as the contents of Embodiment 1 if necessary.

Referring to FIGS. 4 to 6, a method for manufacturing the battery module according to Embodiment 1 of the present invention includes a process (S01) of preparing a bottom plate 140 having one surface to which a cooling plate 130 is coupled, a process (S02) of placing a cell block assembly 110, which is an assembly of a plurality of cells, on the other surface of the bottom plate 140, a process (S03) of coupling a frame 120 to the bottom plate 140 to surround the other surface and a side surface of the cell block assembly 110, and a process (S04) of coupling an end plate 150 to each of front and rear surfaces of the cell block assembly 110.

In the process of preparing the bottom plate 140 having one surface to which the cooling plate 130 is coupled, the cooling plate 130 may be in a state of being welded to the bottom plate 140 through brazing welding. Here, one surface may mean, for example, a bottom surface. In the related art, the cooling plate 130 is welded to one surface of the U frame 120. However, in the present invention, unlike the conventional form, the cooling plate 130 may be welded to one surface of the plate-shaped bottom plate 140. In this case, a volume may be significantly reduced. As a result, a quantity injected into a heat treatment chamber may increase, and thus, costs may be reduced.

The process (S02) of placing the cell block assembly 110 may be a process of moving the cell block assembly 110 disposed at the other side of the bottom plate 140 in one direction D to place the bottom plate 140 on the other surface. In the process of placing the cell block assembly 110 may be a process of placing the cell block assembly 110, which is disposed in a state of disposing a thermal resin between the cell block assembly 110 and the bottom plate 140, on the other surface of the bottom plate 140. Here, the other surface of the bottom plate may mean, for example, a top surface of the bottom plate.

In the process (S03) of coupling the frame 120 to the bottom plate 140, while the frame 120 moves from the other side of the cell block assembly 110 to the one direction D, the frame 120 may cover the cell block assembly 110 and then be coupled to the bottom plate 140. Here, the one direction D may mean, for example, a downward direction. Both sides of the frame 120, particularly, an end of the sidewall 122 in one direction may be coupled to both ends of the bottom plate 140 by laser welding. In order to allow the cell block assembly 110 to be easily inserted into the frame when the frame 120 covers the cell block assembly 110 while moving in the one direction D, the cell block assembly 110 may be inserted into the frame 120 while a lower end of the sidewall 122 of the frame 120 is spread to both sides F and F'. While being inserted as described above, the frame 120 may be coupled to the bottom plate 140. In this process, the frame 120 to which an insulating sheet 160 is coupled to an inner surface may be coupled to the bottom plate 140.

In the process (S04) of coupling the end plates, the end plate 150 may be respectively disposed on front and rear surfaces of the cell block assembly 110. The battery module having a rectangular parallelepiped shape may be formed by welding the end plate 150 to each of the front and rear of the frame 120. In this case, power output from the cell block assembly 110 may be output to the outside of the end plate 150.

### [Description of the Symbols]

110: Cell block assembly
120: Frame
121: Ceiling part
122: Sidewall
122-1: First sidewall
122-2: Second sidewall
130: Cooling plate
140: Bottom plate
141: First plate part
142: Second plate part
150: End plate
160: Insulating sheet
161: Horizontal part
162: Vertical part
170: Thermal resin
W: Welding part

## Claims

1. A battery module comprising:
a cell block (110) assembly that is an assembly of a plurality of cells;
a bottom plate (140) disposed on one surface of the cell block assembly;
a frame (120) configured to surround the other surface and a side surface of the cell block assembly; and
an end plate (150) disposed on each of front and rear surfaces of the cell block assembly,
wherein the frame comprises:
a ceiling part (121) configured to surround the other surface of the cell block assembly; and
a sidewall (122) configured to surround the side surface of the cell block assembly;
**characterized in that** one end of the sidewall and both ends of the bottom plate are coupled to each other through welding;
wherein the sidewall comprises:
a first sidewall (122-1) facing the cell block assembly; and
a second sidewall (122-2) connected to the first sidewall in a stepped shape at one side of the first sidewall to extend in a direction of the one side of the first sidewall;
wherein the bottom plate comprises:
a first plate part (141) facing the cell block assembly to extend in a direction parallel to one surface of the cell block assembly; and
a second plate part (142) extending from each of both ends of the first plate part in a direction away from the cell block assembly.

2. The battery module of claim 1, further comprising a cooling plate (130) coupled to one surface of the bottom plate at one side of the bottom plate.

3. The battery module of claim 2, wherein the cooling plate is coupled to the one surface of the bottom plate through brazing welding.

4. The battery module of claim 1, wherein the ceiling part and the sidewall are integrated with each other.

5. The battery module of claim 1, wherein an end of the second sidewall and an end of the second plate part are coupled to each other through welding (W).

6. The battery module of claim 1, further comprising an insulating film (160) disposed between the frame and the cell block assembly.

7. The battery module of claim 6, wherein the insulating film comprises:
a horizontal part (161) disposed between the ceiling part and the cell block assembly; and
a vertical part (162) disposed between the sidewall and the cell block assembly,
wherein the horizontal part and the vertical part are integrated with each other.

8. The battery module of claim 1, further comprising a thermal resin (170) disposed between the other surface of the bottom plate and one surface of the cell block assembly.

9. A method for manufacturing a battery module defined in claim 1, the method comprising:
a process (S01) of preparing a bottom plate having one surface to which a cooling plate is coupled;
a process (S02) of placing a cell block assembly, which is an assembly of a plurality of cells, on the other surface of the bottom plate;
a process (S03) of coupling a frame to the bottom plate to surround the other surface and a side surface of the cell block assembly; and
a process (S04) of coupling an end plate to each of front and rear surfaces of the cell block assembly.

10. The method of claim 9, wherein the process (S02) of the placing the cell block assembly comprises a process of placing the cell block assembly on the other surface of the bottom plate in a state in which a thermal resin is disposed between the cell block assembly and the bottom plate.

11. The method of claim 9, wherein the process (S03) of coupling the frame to the bottom plate comprises a process of coupling the frame, to which an insulating sheet is coupled to an inner surface thereof, to the bottom plate.

## Patentansprüche

1. Batteriemodul, umfassend:
eine Zellblockanordnung (110), welche eine Anordnung einer Mehrzahl von Zellen ist;
eine Bodenplatte (140), welche an einer Fläche der Zellblockanordnung angeordnet ist;
einen Rahmen (120), welcher dazu eingerichtet ist, die andere Fläche und eine Seitenfläche der Zellblockanordnung zu umgeben; und
eine Endplatte (150), welche an jeder von einer vorderen und einer hinteren Fläche der Zellblockanordnung angeordnet ist,
wobei der Rahmen umfasst:
einen Deckenteil (121), welcher dazu eingerichtet ist, die andere Fläche der Zellblockanordnung zu umgeben; und
eine Seitenwand (122), welche dazu eingerichtet ist, die Seitenfläche der Zellblockanordnung zu umgeben;
**dadurch gekennzeichnet, dass** ein Ende der Seitenwand und beide Enden der Bodenplatte durch Schweißen miteinander gekoppelt sind;
wobei die Seitenwand umfasst:
eine erste Seitenwand (122-1), welche der Zellblockanordnung zugewandt ist; und
eine zweite Seitenwand (122-2), welche mit der ersten Seitenwand in einer gestuften Form an einer Seite der ersten Seitenwand verbunden ist, um sich in einer Richtung der einen Seite der ersten Seitenwand zu erstrecken;
wobei die Bodenplatte umfasst:
einen ersten Plattenteil (141), welcher der Zellblockanordnung zugewandt ist, um sich in einer Richtung parallel zu einer Fläche der Zellblockanordnung zu erstrecken; und
einen zweiten Plattenteil (142), welcher sich von jedem der beiden Enden des ersten Plattenteils in einer Richtung weg von der Zellblockanordnung erstreckt.

2. Batteriemodul nach Anspruch 1, ferner umfassend eine Kühlplatte (130), welche mit einer Fläche der Bodenplatte an einer Seite der Bodenplatte gekoppelt ist.

3. Batteriemodul nach Anspruch 2, wobei die Kühlplatte mit der einen Fläche der Bodenplatte durch Hartlötschweißen gekoppelt ist.

4. Batteriemodul nach Anspruch 1, wobei der Deckenteil und die Seitenwand miteinander integriert sind.

5. Batteriemodul nach Anspruch 1, wobei ein Ende der zweiten Seitenwand und ein Ende des zweiten Plattenteils durch Schweißen (W) miteinander gekoppelt sind.

6. Batteriemodul nach Anspruch 1, ferner umfassend einen Isolierfilm (160), welcher zwischen dem Rahmen und der Zellblockanordnung angeordnet ist.

7. Batteriemodul nach Anspruch 6, wobei der Isolierfilm umfasst:
einen horizontalen Teil (161), welcher zwischen dem Deckenteil und der Zellblockanordnung angeordnet ist; und
einen vertikalen Teil (162), welcher zwischen der Seitenwand und der Zellblockanordnung angeordnet ist,
wobei der horizontale Teil und der vertikale Teil miteinander integriert sind.

8. Batteriemodul nach Anspruch 1, ferner umfassend ein thermisches Harz (170), welches zwischen der anderen Fläche der Bodenplatte und einer Fläche der Zellblockanordnung angeordnet ist.

9. Verfahren zum Herstellen eines in Anspruch 1 definierten Batteriemoduls, wobei das Verfahren umfasst:
einen Prozess (S01) eines Vorbereitens einer Bodenplatte, welche eine Fläche aufweist, mit welcher eine Kühlplatte gekoppelt ist;
einen Prozess (S02) eines Platzierens einer Zellblockanordnung, welche eine Anordnung einer Mehrzahl von Zellen ist, an der anderen Fläche der Bodenplatte;
einen Prozess (S03) eines Koppelns eines Rahmens mit der Bodenplatte, um die andere Fläche und eine Seitenfläche der Zellblockanordnung zu umgeben; und
einen Prozess (S04) eines Koppelns einer Endplatte mit jeder von einer vorderen und einer hinteren Fläche der Zellblockanordnung.

10. Verfahren nach Anspruch 9, wobei der Prozess (S02) des Platzierens der Zellblockanordnung einen Prozess eines Platzierens der Zellblockanordnung an der anderen Fläche der Bodenplatte in einem Zustand umfasst, in welchem ein thermisches Harz zwischen der Zellblockanordnung und der Bodenplatte angeordnet ist.

11. Verfahren nach Anspruch 9, wobei der Prozess (S03) des Koppelns des Rahmens mit der Bodenplatte einen Prozess eines Koppelns des Rahmens, mit welchem eine Isolierschicht an einer Innenfläche desselben gekoppelt ist, mit der Bodenplatte umfasst.

## Revendications

1. Module de batterie comprenant :
un ensemble bloc de cellules (110) qui est un ensemble d'une pluralité de cellules ;
une plaque de fond (140) disposée sur une surface de l'ensemble bloc de cellules ;
un cadre (120) configuré pour entourer l'autre surface et une surface latérale de l'ensemble bloc de cellules ; et
une plaque d'extrémité (150) disposée sur chacune des surfaces avant et arrière de l'ensemble bloc de cellules,
dans lequel le cadre comprend :
une partie de plafond (121) configurée pour entourer l'autre surface de l'ensemble bloc de cellules ; et
une paroi latérale (122) configurée pour entourer la surface latérale de l'ensemble bloc de cellules ;
**caractérisé en ce qu'**une extrémité de la paroi latérale et les deux extrémités de la plaque de fond sont couplées les unes aux autres par soudage ;
dans lequel la paroi latérale comprend :
une première paroi latérale (122-1) faisant face à l'ensemble bloc de cellules ; et
une seconde paroi latérale (122-2) reliée à la première paroi latérale en forme étagée sur un premier côté de la première paroi latérale pour s'étendre dans une direction du premier côté de la première paroi latérale ;
dans lequel la plaque de fond comprend :
une première partie de plaque (141) faisant face à l'ensemble bloc de cellules pour s'étendre dans une direction parallèle à une première surface de l'ensemble bloc de cellules ; et
une seconde partie de plaque (142) s'étendant depuis chacune des deux extrémités de la première partie de plaque dans une direction à l'opposé de l'ensemble bloc de cellules.

2. Module de batterie selon la revendication 1, comprenant en outre une plaque de refroidissement (130) couplée à une première surface de la plaque de fond sur un côté de la plaque de fond.

3. Module de batterie selon la revendication 2, dans lequel la plaque de refroidissement est couplée à la première surface de la plaque de fond par soudage-brasage.

4. Module de batterie selon la revendication 1, dans lequel la partie de plafond et la paroi latérale sont intégrées l'une à l'autre.

5. Module de batterie selon la revendication 1, dans lequel une extrémité de la seconde paroi latérale et une extrémité de la seconde partie de plaque sont couplées l'une à l'autre par soudage (W).

6. Module de batterie selon la revendication 1, comprenant en outre un film isolant (160) disposé entre le cadre et l'ensemble bloc de cellules.

7. Module de batterie selon la revendication 6, dans lequel le film isolant comprend :
une partie horizontale (161) disposée entre la partie de plafond et l'ensemble bloc de cellules ; et
une partie verticale (162) disposée entre la paroi latérale et l'ensemble bloc de cellules, dans lequel la partie horizontale et la partie verticale sont intégrées l'une à l'autre.

8. Module de batterie selon la revendication 1, comprenant en outre une résine thermique (170) disposée entre l'autre surface de la plaque de fond et une première surface de l'ensemble bloc de cellules.

9. Procédé pour fabriquer un module de batterie selon la revendication 1, le procédé comprenant :
un processus (S01) de préparation d'une plaque de fond ayant une première surface à laquelle est couplée une plaque de refroidissement ;
un processus (S02) de placement d'un ensemble bloc de cellules, qui est un ensemble d'une pluralité de cellules, sur l'autre surface de la plaque de fond ;
un processus (S03) de couplage d'un cadre à la plaque de fond pour entourer l'autre surface et une surface latérale de l'ensemble bloc de cellules ; et
un processus (S04) de couplage d'une plaque d'extrémité à chacune des surfaces avant et arrière de l'ensemble bloc de cellules.

10. Procédé selon la revendication 9, dans lequel le processus (S02) de placement de l'ensemble bloc de cellules comprend un processus de placement de l'ensemble bloc de cellules sur l'autre surface de la plaque de fond dans un état dans lequel une résine thermique est disposée entre l'ensemble bloc de cellules et la plaque de fond.

11. Procédé selon la revendication 9, dans lequel le processus (S03) de couplage du cadre à la plaque de fond comprend un processus de couplage du cadre, auquel une feuille isolante est couplée à une surface interne de celui-ci, à la plaque de fond.
